Europäisches Patentamt

European Patent Office

Office européen des brevets

(19)

(11) **EP 0 762 703 B1**

(12) **FASCICULE DE BREVET EUROPEEN**

(45) Date de publication et mention
de la délivrance du brevet:
**29.12.2004 Bulletin 2004/53**

(51) Int Cl.⁷: **H04L 27/26**, H04L 25/02,
H04L 27/233

(21) Numéro de dépôt: **96460030.8**

(22) Date de dépôt: **20.08.1996**

(54) **Démodulation d'un signal multiporteur diminuant une distorsion blanche en fréquence**

Demodulation eines Mehrträgersignals mit Verringerung von weissen Frequenzstörungen

Multicarrier demodulation with reduction of white frequency distortion

(84) Etats contractants désignés:
**DE ES GB IT SE**

(30) Priorité: **21.08.1995 FR 9510067**

(43) Date de publication de la demande:
**12.03.1997 Bulletin 1997/11**

(73) Titulaires:
• **FRANCE TELECOM**
**75015 Paris (FR)**
• **TELEDIFFUSION DE FRANCE S.A.**
**75732 Paris Cedex 15 (FR)**

(72) Inventeurs:
• **Sueur, Bertrand**
**35000 Rennes (FR)**
• **Combelles, Pierre**
**35000 Rennes (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**EP-A- 0 453 203          WO-A-93/26096**
**DE-A- 4 310 031          GB-A- 2 278 257**

**Description**

Le domaine de l'invention est celui de la réception de signaux multiporteuses. Plus précisément, l'invention concerne la correction de la distorsion subie par un tel signal, en vue notamment de l'optimisation de la démodulation des symboles modulant ce signal. Par distorsion, on entend ici, comme on le verra par la suite, les perturbations blanches en fréquence, qu'elles soient dues au canal de transmission ou au récepteur.

L'invention s'applique à tous les types de signaux mettant en oeuvre une pluralité de fréquences porteuses, c'est-à-dire aux systèmes mettant en oeuvre des signaux transmis selon la technique de multiplexage par répartition en fréquence (en anglais : Frequency Division Multiplex (FDM)), et par exemple le système COFDM (Coded Orthogonal Frequency Division Multiplex (multiplexage de fréquences orthogonales codées)), mis en oeuvre notamment dans le cadre du projet européen Eurêka 147 "DAB" (Digital Audio Broadcasting (diffusion audionumérique)), et également pressenti pour la transmission de signaux de télévision par voie hertzienne ou paire torsadée par exemple.

Dans de tels systèmes de transmission, les données source à transmettre sont organisées en symboles (constitués d'une ou plusieurs données source) modulant chacun, pendant un intervalle de temps prédéterminé, une fréquence porteuse choisie parmi une pluralité de porteuses. Le signal formé par l'ensemble des porteuses modulées est transmis vers un ou plusieurs récepteurs, qui reçoivent un signal émis perturbé par le canal de transmission.

La démodulation consiste généralement, dans son principe, à estimer la réponse du canal de transmission pour chaque symbole, puis à diviser le signal reçu par cette estimation pour obtenir une estimation du symbole émis.

On connaît de nombreuses techniques de démodulation, qui peut être différentielle ou cohérente. Une technique facilitant la démodulation cohérente à l'aide de symboles de référence connus des récepteurs et régulièrement insérés parmi les symboles utiles est par exemple décrite dans le brevet FR-90 01491 au nom des mêmes déposants.

Le problème majeur de ces techniques connues est que l'estimation de la réponse du canal obtenue n'est pas toujours exacte ni précise, car elle peut être perturbée par une distorsion blanche en fréquence induite par le récepteur ou dans une moindre mesure pour l'émetteur.

En d'autres termes, en convenant de noter, dans un système multiporteuse, n l'indice temporel et k l'indice fréquentiel (n et **k** appartenant à **Z**), à l'émission, chaque porteuse k d'un symbole n est donc modulée par un symbole $C_{n,k}$ complexe.

Si l'on note $H_{n,k}$ la réponse complexe du canal de transmission, alors on reçoit :

$$Y_{n,k} = H_{n,k}.C_{n,k}.\varnothing_n + \text{bruit blanc} \tag{1}$$

Le bruit blanc est un terme que l'on néglige par la suite.

$\varnothing_n$ est un terme complexe, a priori variable en phase et amplitude qui ne dépend que de **n**, et décrit donc n'importe quelle distorsion "blanche" en fréquence qui entache le signal reçu. Les $\varnothing_n$ sont supposés peu corrélés de symbole en symbole.

Le recouvrement par le récepteur de l'information $C_{n,k}$ transmise implique de savoir isoler le terme $C_{n,k}$ à partir de l'équation (1), par division du $Y_{n,k}$ reçu par une valeur estimée de $H_{n,k}.\varnothing_n$.

L'état de l'art consiste à obtenir d'abord une estimation du produit $H_{n,k}.\varnothing_n$, notée $D_{n,k}$ (D comme "distorsion") dans la suite, pour certains couples (n,k) de **ZxZ**. On note **P²** le sous-ensemble de **ZxZ** formé des couples (n,k) pour lesquels une première valeur de $D_{n,k}$ est estimée par le récepteur.

Une façon souvent utilisée pour obtenir un tel sous-ensemble, décrite par exemple dans le document DE-A-4 310 031, consiste à insérer à l'émission dans la trame des "pilotes" (ou symboles de préférence), c'est-à-dire à émettre pour certaines valeurs de k et de n - prédéterminées à l'avance et connues du récepteur - des valeurs $C_{n,k}$ particulières a priori connues du récepteur. Cette méthode n'est toutefois qu'un exemple, et tout autre méthode adéquate peut être utilisée.

Les valeurs $D_{n_0,k_0}$ pour toutes les valeurs $n_0$ et $k_0$ possibles dans **Z** sont ensuite calculées par le récepteur par interpolation et/ou extrapolation des valeurs $D_{n,k}$, avec (n,k) appartenant à **P²**.

L'état de l'art consiste à définir la fonction $f(n_0,k_0)$ de calcul de $D_{n_0,k_0}$, à partir des $D_{n,k}$, (n,k) appartenant à **P²**.

Un problème majeur, détecté par les inventeurs mais non expressément connu de l'homme du métier, vient du fait que le $D_{n_0,k_0}$ ainsi estimé ne permet pas de distinguer chacun des deux termes du produit : $D_{n_0,k_0} = H_{n_0,k_0}.\phi_{n_0,k_0}$, où $H_{n_0,k_0}$ désigne ce qu'aurait été le résultat de $f(n_0,k_0)$ si tous les $D_{n,k}$ (=$H_{n,k}.\varnothing_n$) servant de base au calcul vérifiaient $\varnothing_n = 1$.

L'invention a notamment pour objectif de pallier ces inconvénients.

Ainsi, un objectif de la présente invention est de fournir un procédé d'estimation de la distorsion subie par un signal multiporteuse, et un dispositif correspondant, permettant notamment d'optimiser la démodulation des symboles formant le signal reçu:

Plus précisément, l'invention a pour objectif de fournir un tel procédé, tenant compte des distorsions induites par les récepteurs.

Un autre objectif de l'invention est de fournir un tel procédé de démodulation, dans lequel l'estimation de la réponse du canal de transmission est optimisée, quelques soient les distorsions induites par les récepteurs.

Ces objectifs, ainsi que d'autres qui apparaîtront par la suite, sont atteints selon l'invention par un procédé de correction de la distorsion subie par un signal multiporteuse formé de symboles modulant une pluralité de fréquences porteuses, tel que revendiqué en revendication 1.

En d'autres termes, l'invention propose d'améliorer l'estimation des distorsions, en corrigeant les informations de référence utilisées pour cette estimation, préalablement au calcul correspondant d'estimation, de façon que ces informations de référence reflètent, à chaque instant de réception, les mêmes distorsions que les symboles reçus.

Ainsi, de façon avantageuse, on affecte chacune desdites estimations de référence ($D_{n,k}$) d'une distorsion sensiblement égale à la distorsion subie par le signal reçu entre l'instant de réception (n) des échantillons servant à la détermination desdites estimations de référence ($D_{n,k}$) et l'intervalle de temps ($n_0$) considéré.

Les éléments de référence se voient donc affectés de la même distorsion que les symboles à démoduler. En d'autres termes, on ne cherche pas, selon l'invention, à supprimer l'effet sur l'estimation des distorsions blanches en fréquences, mais on fait en sorte qu'il soit compensé. En d'autres termes encore, il s'agit d'une approche relative de la correction des effets de la distorsion blanche en fréquence.

Avantageusement, le procédé de l'invention comprend les étapes suivantes :

- détermination de l'écart relatif de distorsion ($\psi_{n \in C}$) induite par le récepteur entre deux intervalles de temps (n-1 et n) consécutif,

$$\psi_n = \frac{\phi_n}{\phi_{n-1}} \forall n \in Z \ ;$$

- pour chaque échantillon reçu ($Y_{n_0,k_0}$), correction des estimations de référence ($D_{n,k}$) à prendre en compte de la façon suivante :

$$
\begin{cases}
D'_{n,k} + D_{n,k} \cdot \displaystyle\sum_{i=n+1}^{n_0} \Psi_i & \text{si } n < n_0 \\[2em]
D'_{n,k} = D_{n,k} & \text{si } n = n_0 \\[2em]
D'_{n,k} = D_{n,k} \cdot \dfrac{1}{\displaystyle\prod_{i=n_0+1}^{n} \Psi_i} & \text{si } n > n_0
\end{cases}
$$

- interpolation et/ou extrapolation par f d'une estimation ($\hat{D}'_{n_0,k_0}$) à partir desdites estimations corrigées ($D'_{n,k}$) pour ledit symbole reçu ($Y_{n_0,k_0}$).

De façon avantageuse, notamment lorsque les distorsions blanches en fréquence correspondent essentiellement à des variations instantanées (ou du moins à leurs moyennes sur la durée d'un symbole) de la fréquence d'oscillation d'un ou plusieurs oscillateurs et peuvent s'écrire $\phi_n = e^{j\sigma n}$ (c'est très souvent le cas), lesdites estimations corrigées ($D'_{n,k}$) peuvent être approximées de la façon suivante :

$$\begin{cases} D'_{n,k} \approx D_{n,k}.(1 + j.\sum_{i=n+1}^{n_0} \delta_i) & \text{si } n < n_0 \\ D'_{n,k} \approx D_{n,k}.(1 - j.\sum_{i=n_0+1}^{n} \delta_i) & \text{si } n > n_0 \end{cases}$$

où :

$$\delta_n = \theta_n - \theta_{n-1} \text{ avec } \phi_n = e^{j\theta_n}.$$

Comme indiqué précédemment, ladite estimation ($\hat{D}_{n_0,k_0}$) peut en particulier être utilisée pour diviser l'échantillon reçu ( $Y_{n_0,k_0}$), de façon à délivrer un symbole source estimé ($C_{n_0,k_0}$).

Selon un mode de réalisation préférentiel de l'invention, correspondant à une démodulation cohérente, lesdits échantillons de référence correspondent à des pilotes, de valeur et de position dans l'espace temps-fréquence connues des récepteurs. Cette technique est bien sûr connue en elle-même.

Selon un autre mode de réalisation, correspondant à une démodulation différentielle, lesdits échantillons de référence sont obtenus de la façon suivante :

$$\forall \; n_0, k_0 \in Z, \; \hat{D}_{n_0,k_0} = D_{n_0\text{-}i,k_0}$$

avec i entier petit (typiquement, i=1).

De façon avantageuse, ladite information ($\psi_n$) représentative de la distorsion induite par le récepteur peut être obtenue, pour chaque échantillon reçu, de la façon suivante :

- décision dure de la valeur de chacun desdits échantillons, par association à chacun desdits échantillons de l'élément de données le plus probable, parmi une constellation d'éléments de données formant un alphabet de modulation ;
- détermination d'un décalage de phase entre chacun desdits échantillons et son élément de donnée associé ;
- estimation de ladite information ($\psi_n$), en fonction de plusieurs décalages de phase correspondant à des fréquences porteuses différentes et à un même intervalle de temps.

Cette technique est également connue en elle-même, et décrite en particulier dans la demande de brevet FR-94 07984 au nom des mêmes déposants.

Selon un autre mode de réalisation avantageux, ladite information ($\psi_n$) représentative de la distorsion induite par le récepteur est obtenue par analyse d'une ou plusieurs fréquences pilotes portant en continu une information de référence fixe et connue des récepteurs.

Dans le cas où l'opération d'interpolation et/ou d'extrapolation comprend une étape d'interpolation et/ou d'extrapolation fréquentielle suivie d'une étape d'interpolation et/ou d'extrapolation temporelle, il peut être avantageux que l'étape de correction des estimations de référence soit effectuée entre ladite étape d'interpolation et/ou d'extrapolation fréquentielle et ladite étape d'interpolation et/ou d'extrapolation temporelle.

L'invention concerne également les dispositifs de correction de la distorsion mettant en oeuvre un tel procédé.

Un tel dispositif est conforme à la revendication 10.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, dans lesquels :

- la figure 1 illustre de façon générale le procédé de correction des distorsions de l'invention ;
- la figure 2 illustre un mode de réalisation particulier du procédé de l'invention, dans lequel on distingue deux étapes d'interpolation et/ou d'extrapolation ;
- la figure 3 est un synoptique simplifié d'un dispositif de correction des distorsions selon l'invention, dans le cas où le signal transmis inclus des pilotes de référence.

Comme indiqué précédemment, la technique connue pour estimer les distorsions subies par les symboles d'un signal multiporteuse consiste à définir une fonction $f(n_0,k_0)$ de calcul de $\hat{D}_{n_0,k_0}$ pour tout $n_0$ et $k_0$ de **Z**, à partir des $D_{n,k}$, $(n,k)$ appartenant à $\mathbf{P}^2$.

L'invention est applicable à toute fonction f. Elle permet d'améliorer l'estimation des $\hat{D}_{n_0,k_0}$ issues du calcul de $f(n_0,k_0)$, en modifiant préalablement les $D_{n,k}$, $(n,k)$ appartenant à $\mathbf{P}^2$ qui servent de base à ce calcul, sans préjuger de la façon dont ces $D_{n,k}$ ont été obtenus.

Ainsi, quelle que soit cette fonction f, on prévoit selon l'invention une étape supplémentaire, qui précède (ou qui s'insère dans) le calcul de $f(n_0,k_0)$, de façon à rendre ce dernier plus exact.

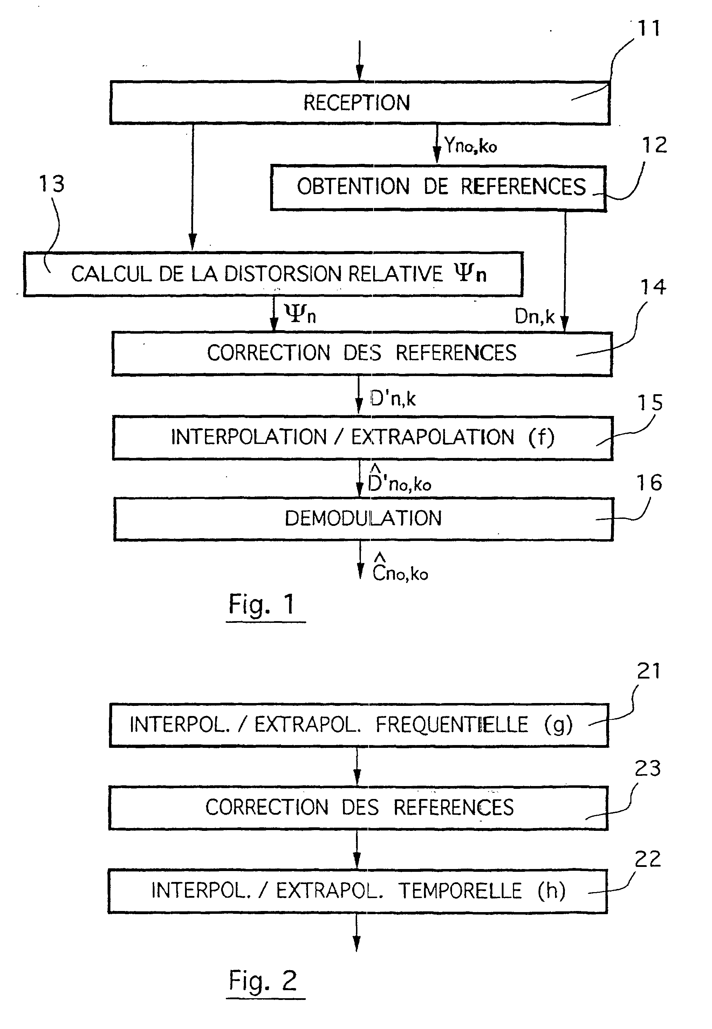

La figure 1 illustre de façon générale le procédé de l'invention, tel qu'il s'insère dans le traitement d'un signal multiporteuse.

Le signal transmis est tout d'abord, lors d'une première étape 11 connue de réception, restitué sous la forme de symboles $Y_{n_0,k_0}$ tels que décrits en préambule. Selon une méthode quelconque, on obtient (12) la série de références $D_{n,k}$.

Une première façon connue, mise en oeuvre pour faciliter la démodulation cohérente du signal reçu, consiste à insérer à l'émission dans la trame des "pilotes", c'est-à-dire à émettre pour certaines valeurs de k et de n, prédéterminées et connues des récepteurs, des valeurs $C_{n,k}$ particulières et connues a priori des récepteurs. Cette technique est notamment présentée dans le document de brevet FR-90 01491 déjà cité.

On note $P_{n,k}$ ces pilotes, et on réserve par la suite la notation $C_{n,k}$ aux vecteurs a priori inconnus des récepteurs, c'est-à-dire porteurs d'informations. Bien sûr, pour des raisons de maximalisation du débit utile transmis, le nombre de vecteurs $C_{n,k}$ sacrifiés en $P_{n,k}$ doit être aussi faible que possible. On note $\mathbf{P}^2$ le sous-ensemble de **ZxZ** des couples $(n,k)$ tels que la porteuses indicée k du symbole n porte un pilote $P_{n,k}$.

Puisque $P_{n,k}$ est a priori connu du récepteur, celui-ci peut calculer la division $Y_{n,k}/P_{n,k}$ et obtenir ainsi une estimation du produit $H_{n,k}.\phi_n$, notée $D_{n,k}$ pour tous les couples $(n,k)$ de $\mathbf{P}^2$.

Une seconde méthode connue (démodulation différentielle), consiste à prendre comme références les symboles reçus précédemment, soit :

$$\forall\, n_0,k_0 \in Z,\ \hat{D}_{n_0,k_0} = D_{n_0\text{-}i,k_0}$$

avec i entier petit (typiquement, i=1).

$D_{n_0\text{-}i,k_0}$ est supposé obtenu par ailleurs dans le récepteur.

On calcule également (13) les distorsions induites par le récepteurs, de façon à obtenir une estimation de $\Psi_n$ (appartenant à **C**), soit :

$$\Psi_n = \frac{\phi_n}{\phi_{n\text{-}1}} \forall\, n \in Z$$

Cette estimation peut s'obtenir par exemple par la méthode décrite dans la demande de brevet déjà citée FR-94 07894. Dans ces grandes lignes, cette méthode consiste à effectuer les trois étapes suivantes :

- décision dure de la valeur de chacun desdits échantillons, par association à chacun desdits échantillons de l'élément de données le plus probable, parmi une constellation d'éléments de données formant un alphabet de modulation ;
- détermination d'un décalage de phase entre chacun desdits échantillons et son élément de donnée associé ;
- estimation de ladite information $(\psi_n)$, en fonction de plusieurs décalages de phase correspondant à des fréquences porteuses différentes et à un même intervalle de temps.

Le document précité précise diverses techniques permettant d'affiner le calcul de l'erreur de phase résiduelle.

Une autre technique permettant la détermination de $\psi_n$ est la transmission en permanence, sur au moins une fréquence porteuse, d'une référence continue. Le calcul est alors direct, par simple comparaison entre deux instants de réception consécutifs.

La fonction d'interpolation et/ou d'extrapolation $f(n_0,k_0)$ déjà décrite permet d'obtenir une estimation de $\hat{D}_{n_0,k_0}$ à partir des $D_{n,k}$, où $(n,k)$ appartient à $\mathbf{P}^2$. Mais cette interpolation/extrapolation $D_{n_0,k_0}$ du produit $H_{n_0,k_0}$, $\phi_{n_0,k_0}$ n'est réellement correcte que pour le terme $H_{n_0,k_0}$ (sous l'hypothèse que les caractéristiques du canal de transmission, en termes d'échos, ne varient pas trop vite). Elle est en revanche incorrecte pour le terme $\phi_{n_0,k_0}$, et ce d'autant plus que les $\phi_n$ sont moins corrélés de symbole en symbole, et donc sont difficilement interpolables et/ou extrapolables.

L'estimation classique :

$$\hat{C}_{n_0,k_0} = \frac{Y_{\hat{n}_0,k_0}}{D_{n_0,k_0}}$$

sera alors biaisée.

Selon l'invention, on prévoit une étape 14 de correction des références $D_{n,k}$, (n,k) appartenant à $\mathbf{P}^2$, avant l'interpolation/extrapolation 15. Cette correction consiste à compenser, à chaque instant de réception, l'effet de $\phi_n$.

Ainsi, chaque terme $D_{n,k}$, (n,k) appartenant à $\mathbf{P}^2$ et tel que $n < n_0$ entrant dans le calcul de $f(n_0, k_0)$ est remplacé par :

$$D'_{n,k} = D_{n,k} \cdot \prod_{i=n+1}^{n_0} \Psi_i \qquad (2)$$

soit :

$$D'_{n,k} = D_{n,k}\, \frac{\phi_{n_0}}{\phi_n} = H_{n,k} \cdot \phi_{n_0}$$

De même, chaque terme $D_{n,k}$, (n,k) appartenant à $\mathbf{P}^2$ et tel que $n > n_0$ entrant dans le calcul de $f(n_0, k_0)$ est remplacé par :

$$D'_{n,k} = D_{n,k}\, \frac{1}{\displaystyle\prod_{i=n_0+1}^{n} \Psi_i} \qquad (3)$$

soit :

$$D'_{n,k} = D_{n,k}\, \frac{\phi_{n_0}}{\phi_n} = H_{n,k} \cdot \phi_{n_0}$$

Dans le cas particulier où des termes $D_{n_0,k}$ (pour tout k appartenant à $\mathbf{Z}$ ; éventuellement k peut même prendre la valeur $k_0$) entreraient dans le calcul de $f(n_0, k_0)$, alors ces termes ne sont pas modifiés selon le calcul ci-dessus, mais restent inchangés.

En d'autres termes : $D'_{n_0,k} = D_{n_0,k} = H_{n_0,k_0} \cdot \phi_{n_0} \ \forall\ k \in Z$.

Dans le cas de la démodulation différentielle, l'étape 14 de correction consiste simplement à remplacer $D_{n_0-i,k_0}$ par :

$$D_{n_0-i,k_0} \cdot \frac{\phi_{n_0}}{\phi_{n_0-i}}$$

avec i petit, et par exemple égal à 1.

Ensuite, on effectue classiquement le calcul d'interpolation et/ou d'extrapolation $f(n_0, k_0)$ 15, pour tous les $n_0$ et $k_0$ de $\mathbf{Z}$, mais cette fois à partir des $D'_{n,k}$. Une méthode pour ce faire est par exemple décrite dans le brevet FR-94 07984, et rapidement commentée par la suite en relation avec la figure 2.

On appelle $D'_{n_0,k_0}$ le résultat du calcul de $f(n_0, k_0)$ ainsi modifié.

La démodulation 16, c'est-à-dire l'estimation de l'information transmise se fait alors classiquement par :

$$\hat{C}'_{n_0,k_0} = \frac{\hat{Y}_{n_0,k_0}}{\hat{D}'_{n_0,k_0}}$$

Typiquement, $\phi_n$ peut décrire les variations instantanées de fréquence de l'oscillateur (ou des oscillateurs) local du récepteur, nécessairement imparfait, ou du moins la valeur moyennée sur la durée d'un symbole de ces variations.

Ces variations sont parfois appelées "bruit de phase". $\phi_n$ peut alors se noter $e^{j\theta n}$.

Le terme

$$\prod_p^q \Psi_n$$

peut alors être avantageusement remplacé par :

$$e^{j\sum_p^q \delta_n}$$

où $\delta_n = \theta_n - \theta_{n-1}$

Si

$$\sum_p^q \delta_n$$

est petit, le terme exponentiel ci-dessus peut être approximé de la façon suivante :

$$e^{j\sum_p^q \delta_n} = 1 + j.\sum_p^q \delta_n$$

et les formules (2) et (3) deviennent alors respectivement :

$$D'_{n,k} \approx D_{n,k}.(1 + j\sum_{i=n+1}^{n_0} \delta_i) \qquad \text{si } n < n_0$$

$$D'_{n,k} \approx D_{n,k}.(1 - j\sum_{i=n_0+1}^{n} \delta_i) \qquad \text{si } n_0 < n$$

Bien que la figure 1 illustre, par souci de simplification, une série d'étapes successives, il est clair que certains calculs peuvent être faits en parallèle.

La figure 2 illustre un mode de mise en oeuvre particulier de l'invention, dans lequel l'opération f($n_0$, $k_0$) d'interpolation et/ou d'extrapolation peut se décomposer en une fonction g d'interpolation et/ou d'extrapolation fréquentielle 21 suivie d'une fonction h d'interpolation et/ou d'extrapolation temporelle 22, il peut être avantageux (mais cela n'est pas obligatoire), pour des raisons de simplicité, d'insérer l'étape de correction 23 de l'invention entre les calculs de g (21) et h (22), et non plus avant le calcul de g.

La procédure de calcul de correction reste bien sûr la même.

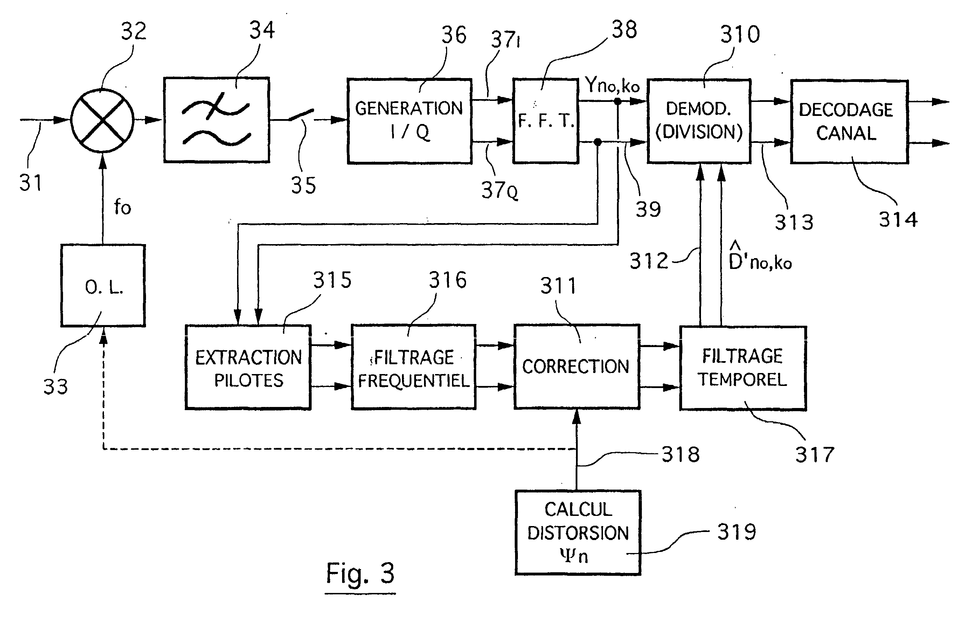

La figure 3 illustre de façon simplifiée d'un mode de réalisation particulier d'un récepteur mettant en oeuvre l'invention.

Le signal reçu 31 est tout d'abord transposé en fréquence basse par un multiplieur 32 contrôlé par un oscillateur local 33 délivrant la fréquence de transposition $f_0$. Puis le signal transposé est filtré par un filtre passe-bas ou passe-bande 34, et converti en un signal numérique par un échantillonneur 35. Ensuite, un module 36 de génération des composantes en phase et en quadrature délivre les voies $37_I$ et $37_Q$.

Dans le cas du COFDM, les voies I et Q sont soumises à une transformation mathématique F.F.T. 38, qui délivre les échantillons 39 $Y_{n0,k0}$.

Les $Y_{n_0,k_0}$ 39 sont démodulés (310) selon le procédé décrit précédemment, par division par $\hat{D}'_{n_0,k_0}$ 312 pour fournir les symboles estimés $C'_{n_0,k_0}$ 313, qui subissent ensuite classiquement un décodage canal 314, puis la suite du traitement jusqu'à la restitution du signal source.

Les $Y_{n_0,k}$ 39 alimentent par ailleurs un module 315 d'extraction des pilotes $D_{n,k}$ qui subissent un premier filtrage fréquentiel 316 puis un second filtrage temporel 317 pour fournir $D'_{n_0,k_0}$ 312 au démodulateur 310.

Selon l'invention, un module de correction 311 est inséré entre les deux modules de filtrage 316 et 317 pour modifier les données délivrés par les modules d'analyse des pilotes 315 et 316. Cette correction tient compte d'une information 318 de distorsion (bruit de phase du récepteur notamment), délivrée par un module 319 de calcul de cette distorsion. Il est à noter que ce module 319 est déjà présent dans certains récepteurs, notamment pour piloter l'oscillateur local 33 et/ou le générateur I/Q 36.

Dans la pratique, les différents modules, ou au moins certains d'entre eux, peuvent bien sûr être regroupés dans un calculateur unique. Par ailleurs, il est clair que d'autres modes de réalisation peuvent être envisagés.

## Revendications

1. Procédé de correction de la distorsion subie par un signal multiporteuse formé de symboles modulant une pluralité de fréquences porteuses,
   selon lequel on détermine par interpolation et/ou extrapolation une estimation ($\hat{D}'_{n_0,k_0}$) de ladite distorsion, comprenant la réponse du canal de transmission et la distorsion induite par le récepteur pour chacun des échantillons reçus ($Y_{n_0,k_0}$), à partir d'estimations de référence ($D_{n,k}$) de ladite distorsion, préalablement déterminées pour certains échantillons, appartenant à un ensemble d'échantillons de référence ($P^2$),
   **caractérisé en ce que** chaque estimation de référence ($D_{n,k}$) est corrigée préalablement à ladite interpolation et/ou à ladite extrapolation, pour chaque intervalle de temps ($n_0$), en fonction d'une information représentative de la variation de la distorsion induite sur les échantillons reçus, entre l'instant de réception ($n$) des échantillons servant à la détermination desdites estimations de référence ($D_{n,k}$) et l'intervalle de temps ($n_0$) considéré.

2. . Procédé selon la revendication 1, **caractérisé en ce qu'**on affecte chacune desdites estimations de référence ($D_{n,k}$) d'une distorsion sensiblement égale à la distorsion subie par le signal reçu entre l'instant de réception ($n$) des échantillons servant à la détermination desdites estimations de référence ($D_{n,k}$) et l'intervalle de temps ($n_0$) considéré.

3. Procédé selon l'une quelconque des revendications 1 et 2, **caractérisé en ce qu'**il comprend les étapes suivantes :

   - détermination de l'écart relatif de distorsion ($\psi_n$) induite par le récepteur entre deux intervalles de temps ($n-1$ et $n$) consécutifs ;
   - pour chaque échantillon reçu ($Y_{n_0,k_0}$), correction des estimations de référence ($D_{n,k}$) à prendre en compte de la façon suivante :

$$\begin{cases} D'_{n,k} = D_{n,k} \cdot \prod_{i=n+1}^{n_0} \psi_i & \text{si } n < n_0 \\ D'_{n,k} = D_{n,k} & \text{si } n = n_0 \\ D'_{n,k} = D_{n,k} \cdot \dfrac{1}{\prod_{i=n_0+1}^{n} \psi_i} & \text{si } n > n_0 \end{cases}$$

- interpolation et/ou extrapolation d'une estimation ($\hat{D}'_{n_0,k_0}$) à partir desdites estimations corrigées ($D'_{n,k}$) pour ledit symbole reçu ($Y_{n_0,k_0}$).

**4.** Procédé selon la revendication 3, **caractérisé en ce que** lesdites estimations corrigées ( $D'_{n,k}$) sont approximées de la façon suivante :

$$\begin{cases} D'_{n,k} \approx D_{n,k} \cdot (1 + j \sum_{i=n+1}^{n_0} \delta_i) & \text{si } n < n_0 \\ D'_{n,k} \approx D_{n,k} \cdot (1 - j \sum_{i=n_0+1}^{n} \delta_i) & \text{si } n_0 < n \end{cases}$$

où: $\delta_n = \theta_n - \theta_{n-1}$ avec $\phi_n = e^{j\theta_n}$.

**5.** Procédé selon l'une quelconque des revendications 1 à 4, **caractérisé en ce que** ladite estimation ($\hat{D}'_{n_0,k_0}$) est utilisée pour diviser l'échantillon reçu ( $Y_{n_0,k_0}$), de façon à délivrer un symbole source estimé ($C_{n_0,k_0}$).

**6.** Procédé selon l'une quelconque de revendications 1 à 5, **caractérisé en ce que** lesdits échantillons de référence correspondent à des pilotes, de valeur et de position dans l'espace temps-fréquence connues des récepteurs.

**7.** Procédé selon l'une quelconque des revendications 1 à 6, **caractérisé en ce que** lesdits échantillons de référence sont obtenus de la façon suivante :

$$\forall n_0, k_0 \in Z, \; D_{n_0,k_0} = \hat{D}_{n_0-1,k_0}$$

avec i entier petit (typiquement, i=1).

**8.** Procédé selon l'une quelconque des revendications 1 à 7, **caractérisé en ce que** ladite information ($\psi_n$) représentative de la distorsion induite par le récepteur est obtenue, pour chaque échantillon reçu, selon une des techniques suivantes :

. réalisation des étapes suivantes :

- décision dure de la valeur de chacun desdits échantillons, par association à chacun desdits échantillons de l'élément de données le plus probable, parmi une constellation d'éléments de données formant un alphabet de modulation ;
- détermination d'un décalage de phase entre chacun desdits échantillons et son élément de donnée associé ;
- estimation de ladite information ($\psi_n$), en fonction de plusieurs décalages de phase correspondant à des fréquences porteuses différentes et à un même intervalle de temps ; ou

9

. analyse d'au moins une fréquence pilote portant en continu une information de référence fixe et connue des récepteurs.

9. Procédé selon l'une quelconque des revendications 1 à 8, **caractérisé en ce que** l'opération d'interpolation et/ou d'extrapolation comprend une étape d'interpolation et/ou d'extrapolation fréquentielle suivie d'une étape d'interpolation et/ou d'extrapolation temporelle,
et **en ce que** l'étape de correction des estimations de référence est effectuée entre ladite étape d'interpolation et/ou d'extrapolation fréquentielle et ladite étape d'interpolation et/ou d'extrapolation temporelle.

10. Dispositif de correction de la distorsion globale subie par un signal multiporteuse formé de symboles modulant une pluralité de fréquence porteuses, pendant un intervalle de temps donné, ladite distorsion globale comprenant la réponse du canal de transmission et la distorsion induite par le récepteur, du type comprenant des moyens de détermination d'estimations de référence ($D_{n,k}$), de ladite distorsion, préalablement déterminées pour certains échantillons, appartenant à un ensemble d'échantillons de référence ($\mathbf{P}^2$), et des moyens d'interpolation et/ou d'extrapolation d'une estimation ($D'_{n_0,k_0}$) de ladite distorsion pour chacun des échantillons reçus ($Y_{n_0,k_0}$), à partir desdites estimations de référence ($D_{n,k}$),
**caractérisé en ce qu'**il comprend des moyens de calcul d'une information représentative de la variation de la distorsion induite par le récepteur sur les échantillons reçus, entre l'instant de réception (n) des échantillons servant à la détermination desdites estimations de référence ($D_{n,k}$) et un intervalle de temps ($n_0$) donné, et des moyens de correction de chaque estimation de référence ($D_{n,k}$) délivrée auxdits moyens d'interpolation et/ou d'extrapolation, en fonction de ladite information représentative de la variation de la distorsion induite sur le signal.

## Patentansprüche

1. Verfahren zum Korrigieren der Störung eines Mehrträgersignals, welches von einer Vielzahl von Trägerfrequenzen modulierenden Symbolen gebildet wird, bei dem man durch Interpolation und/oder Extrapolation einer Schätzung ($D'_{n_0,k_0}$) der erwähnten Störung bestimmt, welche für jeden empfangenen abgetasteten Wert ($Y_{n_0,k_0}$) die Antwort des Übertragungskanals und die vom Empfänger induzierte Störung umfasst, ausgehend von Referenzschätzungen ($D_{n,k}$) der Störung, die für bestimmte abgetastete Werte im Voraus bestimmt wurden, welche einer Menge von abgetasteten Referenzwerten ($P^2$) angehören,
**dadurch gekennzeichnet, dass** jede Referenzschätzung ($D_{n,k}$) vor der Interpolation und/oder Extrapolation für jedes Zeitintervall ($n_0$) als Funktion einer für die Variation der auf die empfangenen abgetasteten Werte induzierte Störung repräsentativen Information korrigiert wird, zwischen dem Zeitpunkt des Empfangs (n) der zum Bestimmen der Referenzschätzungen ($D_{n,k}$) abgetasteten Werte und dem betrachteten Zeitintervall ($n_0$).

2. Verfahren nach Anspruch 1, **dadurch gekennzeichnet, dass** jede der erwähnten Referenzschätzungen ($D_{n,k}$) mit einer Störung behaftet ist, die in etwa der vom empfangenen Signal erlittenen Störung gleicht, zwischen dem Zeitpunkt des Empfangs (*n*) der zum Bestimmen der Referenzschätzungen ($D_{n,k}$) dienenden abgetasteten Werte und dem betrachteten Zeitintervall ($n_0$).

3. Verfahren nach einem der Ansprüche 1 oder 2, **dadurch gekennzeichnet, dass** es einen der folgenden Schritte umfasst:

   - Bestimmung des vom Empfänger zwischen zwei aufeinander folgende Zeitintervalle (n-1 und n) induzierten relativen Störabstandes ($\psi_n$);
   - für jeden empfangenen abgetasteten Wert ($Y_{n_0,k_0}$) Korrektur der zu berücksichtigenden Referenzschätzungen ($D_{n,k}$) wie folgt:

$$D'_{n,k} = D_{n,k} \cdot \prod_{j=n+1}^{n_*} \psi_i \qquad \text{für } n < n_0$$

$$D'_{n,k} = D_{n,k} \qquad \text{für } n = n_0$$

$$D'_{n,k} = D_{n,k} \cdot \cfrac{1}{\prod_{j=n_*+1}^{n} \psi_i} \qquad \text{für } n > n_0$$

- Interpolation und/oder Extrapolation einer Schätzung ($\hat{D}'_{n_0,k_0}$), ausgehend von den korrigierten Schätzungen ($D'_{n,k}$) für das empfangene Symbol ($Y_{n_0,k_0}$).

4. Verfahren nach Anspruch 3, **dadurch gekennzeichnet, dass** die korrigierten Schätzungen ($\hat{D}'_{n_0,k_0}$) folgendermaßen angenähert werden:

$$D'_{n,k} \approx D_{n,k} \cdot \left( 1 + j \sum_{i=n+1}^{n_*} \delta_i \right) \qquad \text{für } n < n_0$$

$$D'_{n,k} \approx D_{n,k} \cdot \left( 1 - j \sum_{i=n_*+1}^{n_*} \delta_i \right) \qquad \text{für } n_0 < n$$

wo: $\delta_n = \theta_n - \theta_{n-1}$ mit $\phi_n = e^{j\theta}$.

5. Verfahren nach einem der Ansprüche 1 bis 4, **dadurch gekennzeichnet, dass** die Schätzung ($\hat{D}'_{n0,k0}$) zum Teilen des empfangenen abgetasteten Wertes ($Y_{n_0,k_0}$) genutzt wird, um ein geschätztes Quellensymbol ($C_{n_0,k_0}$) zu liefern.

6. Verfahren nach einem der Ansprüche 1 bis 5, **dadurch gekennzeichnet, dass** die abgetasteten Referenzwerte Piloten entsprechen, deren Wert und Position im Zeit-Frequenz-Raum den Empfängern bekannt sind.

7. Verfahren nach einem der Ansprüche 1 bis 6, **dadurch gekennzeichnet, dass** die abgetasteten Referenzwerte folgendermaßen erhalten werden:

$$\forall\, n_0,\, k_0 \in Z \text{ gilt: } \hat{D}_{n_0,k_0} = D_{n_0-i,k_0}.$$

wobei *i* eine kleine ganze Zahl ist (typischerweise *i* = 1)

8. Verfahren nach einem der Ansprüche 1 bis 7, **dadurch gekennzeichnet, dass** man die für die vom Empfänger induzierte Störung repräsentative Information ($\psi_n$) für jeden empfangenen abgetasteten Wert nach einer der folgenden Techniken erhält:

• Realisierung der folgenden Schritte:

- harte Entscheidung des Wertes eines jeden abgetasteten Wertes durch Assoziierung des wahrscheinlichsten Datenelementes unter einer ein Modulationsalphabet bildenden Elementengruppe zu einem jeden dieser abgetasteten Werte;
- Bestimmung einer Phasenverschiebung zwischen jedem dieser abgetasteten Werte und dem entsprechenden assoziierten Datenelement;
- Schätzung der Information ($\psi_n$) als Funktion mehrerer, verschiedenen Trägerfrequenzen entsprechenden Phasenverschiebungen sowie als Funktion eines selben Zeitintervalls oder,

• Analyse von mindestens einer Pilotfrequenz, die in kontinuierlicher Weise eine feste und von den Empfängern bekannte Referenzinformation trägt.

9. Verfahren nach einem der Ansprüche 1 bis 8, **dadurch gekennzeichnet, dass** die Interpolation und/oder Extrapolation einen frequenziellen Interpolationsund/oder Extrapolationsschritt umfasst, gefolgt von einem zeitlichen Interpolations- und/oder Extrapolationsschritt und, dass der Schritt zur Korrektur der Referenzschätzungen zwischen dem frequenziellen Interpolations- und/oder Extrapolationsschritt und dem zeitlichen Interpolations- und/oder Extrapolationsschritt erfolgt.

10. Verfahren zum Korrigieren der Gesamtstörung eines aus einer Vielzahl von Trägerfrequenzen modulierenden Symbolen gebildeten Mehrträgersignals während eines gegebenen Zeitintervalls, wobei diese Gesamtstörung die Antwort des Übertragungskanals und die vom Empfänger induzierte Störung umfasst, von der Art, die Mittel zum Bestimmen von Referenzabschätzungen dieser Störung ($D_{n,k}$) umfasst, welche vorher für einige einer Menge von abgetasteten Referenzwerten ($P^2$) gehörenden abgetasteten Werte bestimmt wurden, sowie Mittel zum Interpolieren und/oder Extrapolieren einer Schätzung ($D'_{n_0 k_0}$) dieser Störung für jeden empfangenen abgetasteten Wert ($Y_{n_0,k_0}$), ausgehend von den Referenzschätzungen ($D_{n,k}$), **dadurch gekennzeichnet, dass** es Mittel zum Berechnen einer für die Variation der Störung repräsentativen Information umfasst, welche vom Empfänger an den empfangenen abgetasteten Werten zwischen dem Zeitpunkt des Empfangs (n) der zur Bestimmung der Referenzschätzungen ($D_{n,k}$) dienenden abgetasteten Werte und einem gegebenen Zeitintervall ($n_0$) induziert wird, sowie Mittel zum Korrigieren einer jeden Referenzschätzung ($D_{n,k}$), welche den Interpolationsund/oder Extrapolationsmitteln geliefert wird, als Funktion dieser für die Variation der am Signal induzierten Störung repräsentativen Information.

**Claims**

1. Method for correcting the distortion of a multicarrier signal consisting of symbols modulating a plurality of carrier frequencies, according to which an estimate ($\hat{\mathbf{D}}'_{n_0,k_0}$) of the said distortion, comprising the transmission channel response and the distortion induced by the receiver, is determined by interpolation and/or extrapolation for each of the received samples ($Y_{n_0,k_0}$) on the basis of reference estimates ($D_{n,k}$) of the said distortion, determined previously for certain samples belonging to a set of reference samples ($P^2$), **characterized in that** each reference estimate ($D_{n,k}$) is corrected before the said interpolation and/or the said extrapolation, for each time interval ($n_0$), as a function of an item of information representing the variation of the distortion induced in the received samples between the instant of reception (n) of the samples used for the determination of the said reference estimates ($D_{n,k}$) and the time interval ($n_0$) in question.

2. Method according to Claim 1, **characterized in that** each of the said reference estimates ($D_{n,k}$) is given a distortion approximately equal to the distortion undergone by the received signal between the instant of reception (n) of the samples used for the determination of the said reference estimates ($D_{n,k}$) and the time interval ($n_0$) in question.

3. Method according to either of Claims 1 and 2, **characterized in that** it comprises the following steps:

- determination of the relative deviation due to distortion (_n) induced by the receiver between two consecutive time intervals (n-1 and n);
- for each received sample ($Y_{n_0,k_0}$), correction of the reference estimates ($D_{n,k}$) to be taken into account in the following way:

**12**

$$\begin{cases} D'_{n,k} = D_{n,k} \cdot \sum_{i=n+1}^{n_0} \psi_i & \text{if } n < n_0 \\ D'_{n,k} = D_{n,k} & \text{if } n = n_0 \\ D'_{n,k} = D_{n,k} \cdot \dfrac{1}{\prod\limits_{i=n_0+1}^{n} \psi_i} & \text{if } n > n_0 \end{cases}$$

- interpolation and/or extrapolation of an estimate ($\hat{D}'_{n_0,k_0}$) on the basis of the said corrected estimates ($D'_{n,k}$) for the said received symbol ($Y_{n_0,k_0}$).

4. Method according to Claim 3, **characterized in that** the said corrected estimates ($D'_{n,k}$) are approximated in the following way:

$$\begin{cases} D'_{n,k} \approx D_{n,k} \cdot (1 + j \sum_{i=n+1}^{n_0} \delta_i) & \text{if } n < n_0 \\ D'_{n,k} \approx D_{n,k} \cdot (1 - j \sum_{i=n_0+1}^{n_0} \delta_i) & \text{if } n_0 < n \end{cases}$$

where $\delta_n = \theta_n - \theta_{n-1}$, with $\phi_n = e^{j\theta_n}$.

5. Method according to any one of Claims 1 to 4, **characterized in that** the said estimate ($\hat{D}'_{n_0,k_0}$) is used to divide the received sample ($Y_{n_0,k_0}$) in such a way as to deliver an estimated source symbol ($C'_{n_0,k_0}$).

6. Method according to any one of Claims 1 to 5, **characterized in that** the said reference samples correspond to pilots having known values and positions in the time-frequency domain of the receivers.

7. Method according to any one of Claims 1 to 6, **characterised in that** the said reference samples are obtained in the following way:

$$\forall n_0, k_0 \in Z, \ \hat{D}_{n_0,k_0} = D_{n_0-i,k_0}$$

where i is a small integer (typically, i = 1).

8. Method according to any one of Claims 1 to 7, **characterized in that** the said item of information (_n) representing the distortion induced by the receiver is obtained, for each received sample, by one of the following techniques:

- execution of the following steps:

  - hard decision of the value of each of the said samples, by associating with each of the said samples the most probable data element out of a constellation of data elements forming a modulation alphabet;
  - determination of a phase shift between each of the said samples and its associated data element;
  - estimation of the said item of information (_n), as a function of a plurality of phase shifts corresponding to different carrier frequencies and to a single time interval; or

- analysis of at least one pilot frequency continuously carrying a fixed reference item of information known to the receivers.

9. Method according to any one of Claims 1 to 8, **characterized in that** the operation of interpolation and/or extrapolation comprises a step of frequency interpolation and/or extrapolation, followed by a step of time interpolation and/or extrapolation,
and **in that** the step of correcting the reference estimates is carried out between the said step of frequency interpolation and/or extrapolation and the said step of time interpolation and/or extrapolation.

10. Device for correcting the global distortion of a multicarrier signal consisting of symbols modulating a plurality of carrier frequencies, during a given time interval, the said global distortion comprising the transmission channel response and the distortion induced by the receiver, of the type comprising means for determining reference estimates ($D_{n,k}$) of the said distortion,
determined previously for certain samples belonging to a set of reference samples ($P^2$), and means for interpolating and/or extrapolating an estimate ($D'_{n_0,k_0}$) of the said distortion for each of the received samples ($Y_{n_0,k_0}$) on the basis of the said reference estimates ($D_{n,k}$),
**characterized in that** it comprises means for calculating an item of information representing the variation of the distortion induced by the receiver in the received samples, between the instant of reception (n) of the samples used for the determination of the said reference estimates ($D_{n,k}$) and a given time interval ($n_0$), and means for correcting each reference estimate ($D_{n,k}$) delivered to the said means of interpolation and/or extrapolation, as a function of the said item of information representing the variation of the distortion induced in the signal.

RECEPTION — 11

$Y_{no,ko}$

OBTENTION DE REFERENCES — 12

13

CALCUL DE LA DISTORSION RELATIVE $\Psi_n$

$\Psi_n$ $D_{n,k}$ — 14

CORRECTION DES REFERENCES

$D'_{n,k}$ — 15

INTERPOLATION / EXTRAPOLATION (f)

$\hat{D}'_{no,ko}$ — 16

DEMODULATION

$\hat{C}_{no,ko}$

## Fig. 1

21

INTERPOL. / EXTRAPOL. FREQUENTIELLE (g)

23

CORRECTION DES REFERENCES

22

INTERPOL. / EXTRAPOL. TEMPORELLE (h)

## Fig. 2

Fig. 3

EP 0 762 703 B1